Europäisches Patentamt

European Patent Office

Office européen des brevets

(11) Numéro de publication: **0 250 330 B1**

# FASCICULE DE BREVET EUROPEEN

(45) Date de publication de fascicule du brevet:
23.10.91

(51) Int. Cl.⁵: **A21C 3/02**

(21) Numéro de dépôt: **87401382.4**

(22) Date de dépôt: **19.06.87**

(54) **Dispositif adapté pour allonger des pâtons.**

(30) Priorité: **20.06.86 FR 8608898**

(43) Date de publication de la demande:
**23.12.87 Bulletin 87/52**

(45) Mention de la délivrance du brevet:
**23.10.91 Bulletin 91/43**

(84) Etats contractants désignés:
**AT BE CH DE ES GB GR IT LI LU NL SE**

(56) Documents cités:
**AU-B- 22 937**     **BE-A- 857 418**
**GB-A- 7 174**      **GB-A- 972 782**
**GB-A- 2 161 417**  **US-A- 2 545 667**

(73) Titulaire: **PUMA EQUIPEMENT**
**Z.I. de Mitry Compans**
**F-77290 Mitry Mory(FR)**

(72) Inventeur: **GARREAU Claude Bernard**
**2, Chemin des Plâtreries**
**77113 Seine Port(FR)**

(74) Mandataire: **Polus, Camille et al**
**c/o Cabinet Lavoix 2, Place d'Estienne d'Orves**
**F-75441 Paris Cedex 09(FR)**

## Description

La présente invention concerne un dispositif adapté pour allonger des pâtons et plus particulièrement un dispositif permettant d'allonger des pâtons ou des tronçons de ceux-ci d'environ une fois et demie à deux fois leur longueur initiale et ce en continu, sans aucune intervention manuelle de l'entrée à la sortie du dispositif.

Dans les techniques actuelles de la boulangerie, les pâtons sont en général allongés en les roulant sur eux-mêmes entre un tapis transporteur inférieur à bords latéraux parallèles ou constitués de courroies parallèles et un plateau supérieur fixe pouvant être rapproché ou écarté du dessus du tapis suivant le diamètre ou la longueur désirés pour le pâton allongé. Cette disposition ne donne pas entièrement satisfaction quant à l'allongement équilibré des pâtons, la pâte ne fuyant pas toujours de la même façon au cours du laminage vers les bords latéraux du tapis. On connaît également un dispositif d'allongement de pâtons utilisant des disques rotatifs de grand diamètre montés sur roulements à rotule de manière divergente en direction de la sortie du dispositif, ces disques étant recouverts sur environ la moitié de leur périphérie par une tôle à écartement réglable pour permettre le passage des pâtons entre elle et les bords circonférentiels des disques. Avec ce dispositif le laminage ainsi que l'allongement des pâtons s'effectue assez bien puisque les disques tendent à étirer la pâte en même temps qu'ils provoquent une diminution de diamètre du pâton à leur aplomb mais cependant un inconvénient se présente car les pâtons allongés portent encore à leur sortie du dispositif des rainures marquées à l'emplacement des disques.

AU-B-22 937 et BE-A-857 418 décrivent un dispositif selon le préambule de la revendication 1.

La présente invention tend à annuler ces inconvénients des dispositifs antérieurs et, pour ce faire, elle est conçue pour provoquer sur les pâtons un laminage et un étirage combinés très progressifs sur une distance relativement longue, les pâtons en cours d'allongement tournant en même temps lentement sur eux-mêmes.

Selon la présente invention, le dispositif pour l'allongement des pâtons est remarquable par le fait qu'il est constitué par un tapis inférieur sans fin dont les bords latéraux se déplacent de manière divergente, de l'entrée vers la sortie, c'est à dire un tapis conçu pour qu'au cours de son déplacement il s'élargisse de l'entrée vers la sortie et inversement se rétrécisse de la sortie vers l'entrée, et par un tapis supérieur semblable, mais légèrement plus court à l'entrée pour permettre l'alimentation des pâtons calibrés à allonger, ce tapis supérieur étant monté à écartement réglable par rapport au tapis inférieur en présentant une pente descendante et convergente vers la sortie, et étant entraîné dans le sens de la sortie à une vitesse légèrement moindre que celle du tapis inférieur, entraîné également dans le sens de la sortie, ces vitesses de déplacement différentes étant réglées de manière que les pâtons en cours d'allongement tournent lentement sur eux-mêmes.

De manière plus spécifique, chacun des tapis inférieur et supérieur est constitué par des courroies en "T" dont les nervures inférieures sont guidées de manière divergente de l'entrée vers la sortie du dispositif par des rainures pratiquées dans un plateau intermédiaire situé longitudinalement entre les galets d'entraînement et de tension des courroies, celles-ci étant en outre recouvertes de bandes de tissu.

Dans un autre mode de réalisation, chaque tapis est constitué par des chaînes à plaquettes disposées comme les courroies de manière divergente de l'entrée vers la sortie du dispositif, chaque chaîne ayant ses plaquettes recouvertes par une bande sans fin de tissu sensiblement souple et élastique.

Dans un autre mode de réalisation, l'ensemble des courroies de chaque tapis est recouvert par une bande unique de tissu à mailles lâches et/ou très élastique transversalement, les bords latéraux de cette bande étant fixés aux courroies extrêmes latérales. A noter que cette bande peut être, en outre, fixée sur la courroie centrale et d'autres courroies intermédiaires pour parfaire son entraînement et son élargissement progressif.

Dans un autre mode de réalisation, chaque tapis peut être constitué par une bande unique, élastique transversalement et pourvue de nervures inférieures initialement parallèles adaptées pour pénétrer et être guidées par les rainures des plateaux, divergentes de l'entrée vers la sortie du dispositif.

En outre, on doit noter que dans tous ces modes de réalisation les tapis sont conçus de manière à atteindre, à la sortie du dispositif, une largeur d'environ une fois et demie à deux fois leur largeur initiale à l'entrée. Par ailleurs, ces tapis sont installés de préférence en pente descendante de l'entrée vers la sortie du dispositif afin de faciliter leur progression par gravité vers la sortie bien qu'ils soient déplacés dans cette direction par les tapis qui les enserrent.

D'autres caractéristiques de la présente invention apparaîtront de la description suivante d'un mode de réalisation du dispositif conforme à l'invention, donné à titre d'exemple non limitatif, et représenté schématiquement dans les dessins ci-joints dans lesquels:

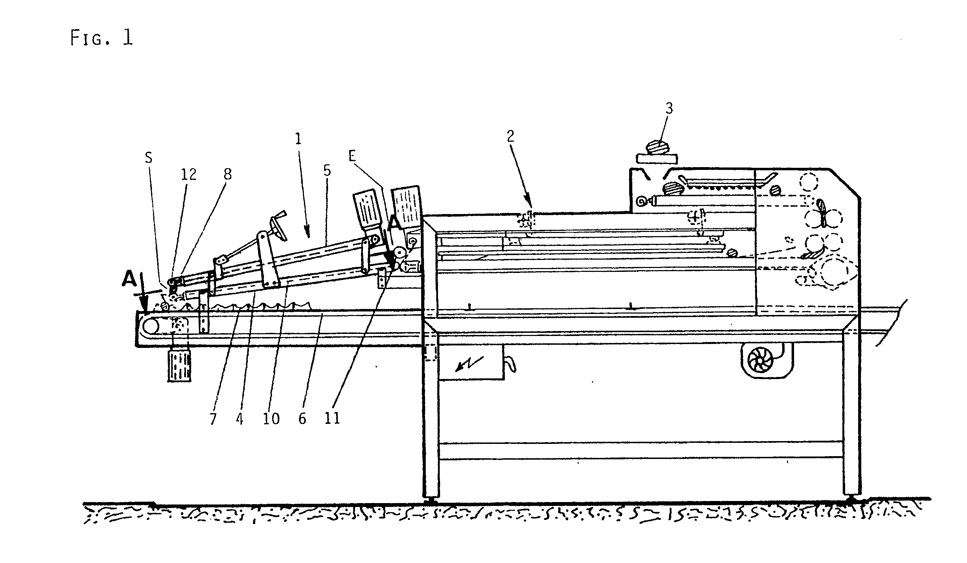

- La figure 1 est une vue en élévation du dispositif conforme à l'invention, prolongeant un appareil de calibrage de pâtons;

- La figure 2 est une vue en plan, prise suivant la ligne AA de la figure 1, du tapis inférieur du dispositif.

Comme on le remarque de ces figures, le dispositif pour l'allongement de pâtons, référencé 1 d'une manière générale, prolonge un appareil 2 adapté pour calibrer des pâtons et les découper éventuellement en tronçons (pour petits pains), en partant d'une boule de pâte 3. Ce dispositif 1, conforme à l'invention est constitué par un tapis inférieur 4 et un tapis supérieur 5 montés à écartement réglable de manière convergente de l'entrée E vers la sortie S du dispositif, le tapis supérieur 5 étant légèrement plus court, à l'entrée E, que le tapis inférieur 4 pour fournir une plage d'alimentation des pâtons calibrés provenant de l'appareil 2. Ces tapis 4,5 sont en outre montés en pente descendante de l'entrée E vers la sortie S pour décharger sur un convoyeur 6 qui peut, comme représenté, alimenter des filets 7 ou encore transporter les pâtons allongés 8 vers un autre stade de fabrication du pain.

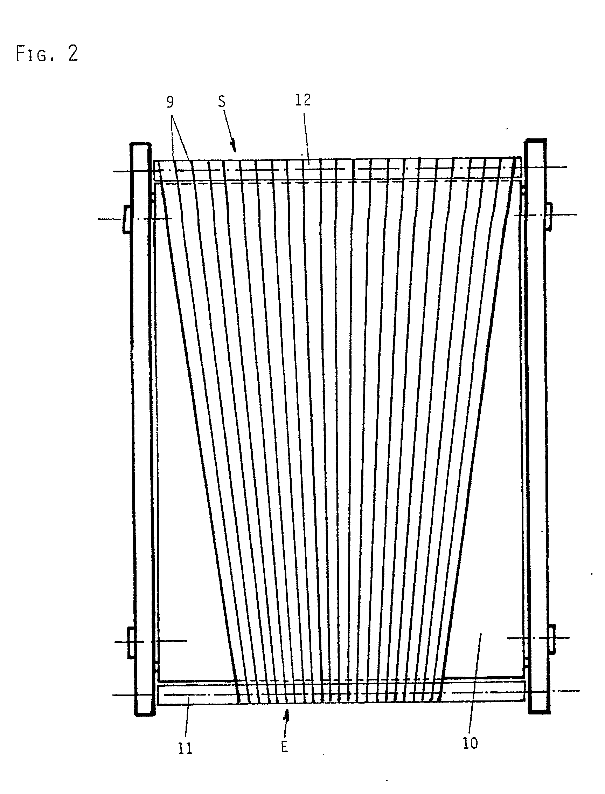

Comme on le voit au mieux dans la figure 2, qui représente en plan le tapis inférieur 4, le tapis supérieur 5 ayant la même constitution, ces tapis sont constitués par des courroies sans fin 9 montées et se déplaçant de manière divergente de l'entrée E vers la sortie S. Les courroies 9 ont une section en "T" et leur nervure inférieure est guidée dans des rainures divergentes pratiquées dans un plateau 10 intermédiaire situé entre les galets d'entraînement 11 et les galets de tension 12 des courroies.

Comme représenté dans cette figure 2, les courroies à la sortie S couvrent une largeur égale à pas tout à fait deux fois la largeur qu'elles couvrent à l'entrée E.

On comprend maintenant facilement le fonctionnement du dispositif conforme à l'invention, si l'on prend note que, comme on l'a indiqué précédemment, le tapis supérieur 5 se déplace à une vitesse légèrement moindre que celle du tapis inférieur 4. En effet, lorsqu'un pâton calibré, délivré par l'appareil 2, arrive à l'entrée E sur le tapis inférieur 4, il est entraîné immédiatement par celui-ci sous le tapis supérieur 5, si bien qu'il se trouve pincé entre ces deux tapis. Ensuite, entraîné par ces deux tapis, il subit un laminage progressif du fait de leur écartement convergent vers la sortie, en même temps qu'on étirage du au déplacement divergent des courroies constituant ces tapis, ainsi qu'une rotation sur lui-même due aux vitesses de déplacement différentes des tapis. Etant donné que ces tapis sont conçus relativement longs, l'allongement des pâtons calibrés est très progressif, si bien qu'aucun effet de rupture ou de striction de la pâte n'est à craindre, l'affaiblissement du diamètre des pâtons par laminage fournissant, de lui-même, la compensation de l'allongement produit par l'étirage.

## Revendications

1. Dispositif adapté pour allonger des pâtons préalablement calibrés et constitué de deux tapis convoyeurs superposés avec un écartement de passage des pâtons réglable en convergence de l'entrée vers la sortie, chaque tapis étant conçu pour que ses bords latéraux divergent dans son sens d'avance, le tapis supérieur ayant une vitesse d'avance légèrement moindre que celle du tapis inférieur, dispositif caractérisé par le fait que chacun des tapis inférieur (4) et supérieur (5) est constitué par une nappe de courroies sans fin (9) guidées de l'entrée à la sortie du dispositif par des rainures divergentes dans le sens d'avance des tapis (4,5) pratiquées dans un plateau intermédiaire (10) situé longitudinalement entre les galets d'entraînement (11) et de tension (12) des courroies, lesquelles sont recouvertes de bandes de tissu.

2. Dispositif selon la revendication 1, caractérisé par le fait que chaque courroie (9) est de section en "T", sa nervure inférieure étant engagée dans la rainure de guidage correspondante du plateau intermédiaire (10) et sa face supérieure étant recouverte par une bande sans fin de tissu sensiblement souple et élastique.

3. Dispositif selon l'une ou l'autre des revendications 1 ou 2, caractérisé par le fait que la nappe de courroie de chaque tapis (4,5) est recouverte par une bande unique sans fin de tissu à mailles lâches et/ou très élastique tansversalement, les bords latéraux de cette bande étant fixés aux courroies extrêmes latérales.

4. Dispositif selon la revendication 3, caractérisé par le fait que la bande unique de tissu est fixée, outre ses bords latéraux aux courroies extrêmes latérale, à la courroie centrale ainsi qu'à d'autres courroies intermédiaires pour parfaire son entraînement et son élargissement progressif de l'entrée (E) vers la sortie (S) du dispositif.

5. Dispositif selon la revendication 1, caractérisé par le fait que la nappe de courroies de chaque tapis est constituée sous forme d'une bande unique, élastique transversalement au sens d'avance des tapis (4,5) et pourvue de nervures inférieures initialement parallèles adaptées pour pénétrer et être guidées par les rainures des plateaux (10), divergentes de l'entrée vers la sortie du dispositif.

6. Dispositif selon l'une quelconque des revendications 1 à 5, caractérisé par le fait que les tapis (4,5) sont conçus de manière à atteindre à la sortie (S) du dispositif une largeur d'environ une fois et demie à deux fois leur largeur initiale à l'entrée.

7. Dispositif selon l'une quelconque des revendications 1 à 7, caractérisé par le fait que les tapis (4,5) sont installés en pente descendante de l'entrée (E) vers la sortie (S).

## Claims

1. Device which is adapted for elongating previously graded lumps and consists of two conveying mats superimposed with spacing for the passage of the lumps which can be adjusted so as to converge from the inlet to the outlet, each mat being designed so that its lateral edges diverge in its advancing direction, the upper mat having a slightly lower speed of advance than the lower mat, the device being characterised in that the respective lower mat (4) and upper mat (5) consist of a layer of endless belts (9) guided from the inlet to the outlet of the device by grooves which diverge in the direction of advance of the mats (4, 5) and are made in an intermediate deck (10) located longitudinally between the belt drive rollers (11) and tension rollers (12) covered by strips of fabric.

2. Device according to claim 1, characterised in that each belt (9) has a "T" section, its lower rib engaging in the corresponding guide groove of the intermediate deck (10) and its upper face being covered by an endless strip of substantially flexible and elastic fabric.

3. Device according to one or other of claims 1 or 2, characterised in that the belt layer of each mat (4, 5) is covered by a single endless strip of fabric which has a loose mesh and/or is transversely very elastic, the lateral edges of this strip being fixed to the extreme lateral belts.

4. Device according to claim 3, characterised in that the single strip of fabric is fixed, apart from its lateral edges, to the extreme lateral belts, to the central belt and to other intermediate belts to complete the driving thereof and the progressive widening thereof from the inlet (E) to the outlet (S) of the device.

5. Device according to claim 1, characterised in that the layer of belts of each mat is made up in the form of a single strip which is transversely elastic in the direction of advance of the mats (4, 5) and is provided with lower ribs which are initially parallel and are adapted to penetrate and to be guided by the grooves of the decks (10) diverging from the inlet to the outlet of the device.

6. Device according to any one of claims 1 to 5, characterised in that the mats (4, 5) are designed so as to give the outlet (S) of the device a width which is about one and a half times to twice their initial width at the inlet.

7. Device according to any one of claims 1 to 7, characterised in that the mats (4, 5) are installed in a slope which descends from the inlet (E) to the outlet (S).

## Patentansprüche

1. Vorrichtung geeignet zum Verlängern von zuvor abgemessenem Brotteig, die aus zwei übereinander angeordneten Förderbändern mit einem regelbaren Abstand für den Durchlaß von Brotteig, der von Eingang bis zum Ausgang zusammenläuft, besteht, wobei jedes Band so ausgeführt ist, daß seine Seitenränder in seiner Vorwärtsrichtung divergieren, wobei das obere Band eine geringfügig niedrigere Fördergeschwindigkeit als das untere Band besitzt, wobei die Vorrichtung gekennzeichnet ist durch die Tatsache, daß jedes von dem unteren Band (4) und dem oberen Band (5) aus einer Matte aus endlosen Riemen (9) besteht, die vom Eingang zum Ausgang der Vorrichtung durch in der Vorwärtsrichtung der Bänder (4, 5) divergierende Rillen, die in eine Zwischenplatte (10), die sich longitudinal zwischen den Führungs- (11) und Spannungs-(12) Rollen der Riemen, die mit Gewebe bedeckt sind, befindet, geführt werden.

2. Vorrichtung nach Anspruch 1, gekennzeichnet durch die Tatsache, daß jeder der Riemen (9) einen "T"-förmigen Querschnitt besitzt, wobei dessen untere Rippe in die entsprechend Führungsrille der Zwischenplatte (10) eingerastet ist und dessen obere Seite mit einem endlosen Gewebeband bedeckt ist, das im wesentlichen weich und elastisch ist.

3. Vorrichtung nach einem der Ansprüche 1 oder 2, gekennzeichnet durch die Tatsache, daß die Riemenmatte jedes Bandes (4, 5) von einem einzigen, endlosen Gewebeband mit transversal offenen und/oder sehr elastischen Maschen bedeckt ist, wobei die seitlichen Ränder dieses Bandes an den seitlich äußersten Riemen befestigt sind.

4. Vorrichtung nach Anspruch 3, gekennzeichnet durch die Tatsache, daß das einzige Gewebeband außer über seine seitlichen Ränder an den seitlich äußersten Riemen auch an dem mittleren Riemen ebenso wie an anderen Zwischenriemen befestigt ist, um seine Führung und seine vom Eingang (E) zum Ausgang (S) hin zunehmende Verbreiterung zu erreichen.

5. Vorrichtung nach Anspruch 1, gekennzeichnet durch die Tatsache, daß die Riemenmatte jedes Bandes in der Form eines einzigen, transversal zur Fortbewegungsrichtung der Bänder (4, 5) elastischen Bandes vorliegt und mit anfänglich parallelen, unteren Rippen versehen ist, die geeignet sind, in die vor Eingang zum Ausgang divergierenden Rillen der Platten (10) einzudringen und von diesen geführt zu werden.

6. Vorrichtung nach einem der Ansprüche 1 bis 5, gekennzeichnet durch die Tatsache, daß die Bänder (4, 5) so aufgebaut sind, daß sie am Ausgang der Vorrichtung (S) eine Breite von ungefähr dem Eineinhalbfachen bis Zweifachen ihrer ursprünglichen Breite am Eingang erreichen.

7. Vorrichtung nach einem der Ansprüche 1 bis 6, gekennzeichnet durch die Tatsache, daß die Bänder (4, 5) mit einer vom Eingang (E) zum Ausgang (S) abschüssigen Neigung installiert sind.

Fig. 1

FIG. 2